# EUROPÄISCHE PATENTANMELDUNG

(11) **EP 2 716 794 A1**
(43) Veröffentlichungstag der Anmeldung: **09.04.2014**
(21) Anmeldenummer: 13187412.5
(22) Anmeldetag: 04.10.2013
(51) Int. Cl.: C25B 1/10, C25B 9/00, C02F 1/461

(54) **Elektrolysezelle**

(30) Priorität: 04.10.2012 CH 18562012
(71) Anmelder: Biostel Schweiz Ag, 8863 Buttikon SZ (CH)
(72) Erfinder: Wachter, Dany, 8863 Buttikon (CH)
(74) Vertreter: Hasler, Erich

(57) **Zusammenfassung**

Elektrolysezelle beinhaltend ein Gehäuse oder Rahmen (13,14), zwei Elektroden (1, 2), insbesondere eine Kathode und eine Anode, emgefasst bzw. getragen durch das Ge-häuse bzw. den Rahmen, einen elektrischen Anschluss (41) an jeder Elektrode (1, 2), zumindest eine semipermeable Membran (5) angeordnet zwischen Kathode und Anode, zumindest zwei Abstandshalter (6, 6') angeordnet einerseits zwischen Membran und Kathode und andererseits zwischen Membran und Anode, wodurch zwischen den Elektroden (1, 2) zwei durch die Membran voneinander abgegrenzte Kammern (7,8) entstehen, in jeder der zwei Kammern (7, 8) je eine Eintrittsöffnung (9, 10) und eine Austrittsöffnung (9', 10') für einen Elektrolyt. Die Elektrolysezelle zeichnet sich im Weiteren dadurch aus, dass eine Vielzahl von Druckmitteln im Gehäuse oder Rahmen angeordnet sind, um den Anpressdruck zwischen Kathode und Anode einzustellen. Hierdurch wird eine hohe Effizienz des Elektrolyseprozesses erzielt.

## Beschreibung

### TECHNISCHES GEBIET DER ERFINDUNG

Die Erfindung bezieht sich auf eine Elektrolysezelle nach dem Oberbegriff des unabhängigen Schutzanspruchs 1.

### HINTERGRUND DER ERFINDUNG

Elektrolysezellen mit Diaphragma werden beispielsweise verwendet, um mit elektrochemischen Prozessen in Lösungen von Salzen das Wasser in Wasserstoff und Sauerstoff aufzuspalten. Die dabei erzeugten Ionen werden im elektrischen Feld getrennt und bilden mit Ionen des Salzes oder der Salze Säure und Lauge. Die so erzeugten Laugen und Säuren werden beispielsweise als Desinfektionsmittel verwendet.

Die aus der Gebrauchsmusterschrift DE 20 2007 004 181 U1 bekannte Elektrodiaphragmalysezelle weist einen Innenraum auf, welcher mit einer semipermeablen (halbdurchlässigen) Membran in zwei Kammern geteilt ist, eine Kathode in der einen Kammer und eine Anode in der anderen Kammer. Jede der Kammern besitzt eine Eintrittsöffnung für ein leicht salzhaltiges und kalkfreies Wasser und eine Austrittsöffnung. Die Kathode und/ oder die Anode sind aus Metall, vorzugsweise aus Titan, insbesondere Reintitan, gefertigt. Die Anode kann eine säurebeständige Beschichtung tragen aufgrund derer sich die Lebensdauer der Elektrodiaphragmalysezelle verlängert.

Der Innenraum der Elektrodiaphragmalysezelle wird durch die semipermeable Membran in zwei gleich grosse Kammern getrennt. In jeder der beiden Kammern ist eine Elektrode vorhanden. An die beiden Elektroden wird eine Gleichstromspannung angelegt. Der Elektrolysestrom wird beispielsweise bei einer Spannung von 24 Volt DC (Gleichstrom) in einem Bereich bis 20 Ampere (typisch 14 A) gewählt und eingestellt. Den beiden Kammern wird NaCl-Lösung, so genannte Kochsalzsole mit kalkfreiem (enthärtetem) Wasser zugeführt.

Unter dem Einfluss der an den beiden Elektroden angelegten elektrischen Spannung bildet sich in der Kammer mit der Anode eine saure Lösung, in der neben anderen die Verbindungen und Ionen H₂O, Cl₂, HClO, HO₂, CIO und O₃H enthalten sein können. In der Kammer mit der Kathode bildet sich eine basische Lösung, in der neben anderen die Verbindungen und Ionen H₂O, NaOH, H(X), H₂(X), OH- enthalten sein können.

Die mit der genannten Elektrodiaphragmalysezelle erzeugten Produkte werden je nach Anwendung verdünnt und/oder gemischt. Wichtige Anwendungen sind reinigen und keimfrei machen.

Bekannte Elektrolysezellen, insbesondere z.B. Elektrolysezellen mit Diaphragma gemäss DE 20 2007 004181 U, weisen eine unzureichende Effizienz auf, was sich in einem hohen Stromverbrauch und somit hohen Betriebskosten zeigt.

### AUFGABE

Es ist deshalb eine Aufgabe der vorliegenden Erfindung, eine Elektrolysezelle bereitzustellen, welche die Nachteile des Stands der Technik nicht aufweist. Insbesondere soll eine Elektrolysezelle bereitgestellt werden, welche eine erhöhte Effizienz aufweist

### BESCHREIBUNG DER ERFINDUNG

Die genannten und andere Ziele werden durch die Merkmale der unabhängigen Patentansprüche erreicht. Weiterbildungen und/ oder vorteilhafte Ausführungsvarianten der Erfindung sind Gegenstand der abhängigen Patentansprüche.

Aufgrund konstruktiver Massnahmen kann erfindungsgemäss die Effizienz der Elektrolysezelle wesentlich verlängert werden.

Diese Erfindung erfüllt die vorhergehenden Erfordernisse, indem sie eine Elektrolysezelle gemäss Anspruch 1 bereitstellt. Die erfindungsgemässe Elektrolysezelle umfasst ein Gehäuse oder Rahmen, insbesondere mit einer ersten Gehäuseschale und einer zweiten Gehäuseschale (14), welche über jeweiligen Randzonen zusammensetzbar, insbesondere zusamnnenklemmbar, sind, wobei die Gehäuseschalen innerhalb der Randzonen Rückwände zur Stützung von Elektroden aufweisen, zwei Elektroden, insbesondere eine Kathode und eine Anode, eingefasst bzw. getragen durch das Gehäuse bzw. den Rahmen, einen elektrischen Anschluss an jeder Elektrode, zumindest eine semipermeable Membran (Diaphragma) zur Anordnung, insbesondere angeordnet, zwischen Kathode und Anode, zumindest zwei Abstandshalter zur Anordnung, insbesondere angeordnet, einerseits zwischen Membran und Kathode und andererseits zwischen Membran und Anode, wodurch zwischen den Elektroden zwei durch die Membran voneinander abgegrenzte Kammern entstehen, in jeder der zwei Kammern je eine Eintrittsöffnung und eine Austrittsöffnung für einen Elektrolyt, und zeichnet sich insbesondere dadurch aus, dass eine Vielzahl von Druckmitteln im Gehäuse oder Rahmen angeordnet sind, um den Anpressdruck zwischen Kathode und Anode einzustellen, und bevorzugt dadurch ausgezeichnet, dass zumindest eine der Rückwände eine Vielzahl von Durchbrüchen aufweist und eine Vielzahl von Druckmitteln in den Durchbrüchen angeordnet sind, um den Anpressdruck zwischen Kathode und Anode einzustellen.

Die Druckmittel dienen dazu einen Druck auf die Rückseite zumindest einer der Elektroden und somit eine Presskraft zwischen den beiden Elektroden zu erzeugen. Der Druck auf die Rückseite zumindest einer der Elektroden und somit die Presskraft zwischen den beiden Elektroden ist hierbei unabhängig von der Klemmkraft zwischen den beiden Gehäuseschalen.

Eine Vielzahl von Durchbrüchen bzw. Druckmitteln beinhaltet in diesem Zusammenhang vorzugsweise mindestens 6, vorzugsweise mindestens 10, Durchbrüche bzw. Druckmittel.

Diese Elektrolysezelle hat insbesondere die Vorteile, dass die Elektrolyse höchst effizient, kostengünstig und sicher durchgeführt werden kann.

Die im Folgenden angeführten vorteilhaften Ausführungsvarianten führen allein oder in Kombination miteinander zu weiteren Verbesserungen der Effizienz der Elektrolysezelle und somit eines elektrohydraulischen Generators, welcher mit einer oder mehreren derartigen Elektrolysezellen bestückt ist.

Vorzugsweise ist die Vielzahl der Druckmittel an der Hinterseite (d.h. an der der aktiven Elektrodenseite abgewandten Rückseite) einer der zwei Elektroden angeordnet, wobei die Anordnung der Druckmittel insbesondere dem Verlauf des Abstandshalters angepasst ist bzw. die Druckmittel dem Verlauf des Abstandshalters folgend angeordnet sind. Diese Art der Anordnung der Druckmittel dient dazu, Druck auf die abdichtenden Flächenrandbereiche der Elektrode, welche mit dem Abstandshalter in dichtendem Kontakt steht, auszuüben.

Im Weiteren ist die Vielzahl der Druckmittel zweckmässig in Reihen mit im Wesentlichen gleichmässigen Abständen zwischen den in einer Reihe aufgereihten Druckmitteln angeordnet.

Die Distanz von Druckmittelzentrum zu Druckmittelzentrum aufgereihter Druckmittel liegt vorzugsweise im Bereich von 1 cm bis 2 cm.

Durchschnittlich ist pro 3 cm² bis 4 cm² Elektrodenfläche (gemessen an der Elektrodenrückseite) ein Druckmittel vorgesehen.

Die Druckmittel können als Schrauben ausgeführt sein, insbesondere als Gewindestifte, vorzugsweise mit Innensechskant. Zusätzlich kann das Gewinde anstatt mit einem Regelgewinde mit einem Feingewinde ausgeführt sein um eine Feineinstellung zu gewähren.

Vorzugsweise besteht das Gehäuse zumindest aus einer ersten Gehäuseschale und einer zweiten Gehäuseschale, welche zusammensetzbar sind, wobei vorteilhafterweise zumindest eine Gehäuseschale eine Aussparung mit zurückgesetzter Rückwand aufweist, um einen Hohlraum zu bilden, welcher zumindest eine Elektrode (ganz oder teilweise) aufzunehmen vermag.

Die Aussparung ist sozusagen mit einer Randzone oder Umfassung umrandet. Die Randzone oder Umfassung weist vorteilhafterweise Mittel und Strukturen zur gegenseitigen Befestigung der Gehäuseschalen auf. Geeignete Mittel beinhalten z.B. Elemente eines Schraubverschlusses, welche dazu dienen die Gehäuseschalen über miteinander kommunizierende Strukturen, z.B. Durchgangslöcher, welche in den Randzonen bzw. Umfassungen zweier Gehäuseschalen miteinander kommunizierend angelegt sind.

Zweckmässigerweise ist mindestens die erste Gehäuseschale an der Randzone mit einer ersten Umfassung verstärkt, optional auch die zweite Gehäuseschale an deren Randzone mit einer zweiten Umfassung, sodass die Gehäuseschalen über die Umfassungen, welche sich vorteilhaft über die Rückwände erheben, zusammengefügt einen inneren Hohlraum bilden, welcher als Elektrodenaufnahme dienen kann.

Die Rückwand weist eine Vielzahl von Durchbrüchen zur Aufnahme der Druckmittel auf, wobei vorteilhafterweise die Durchbrüche mit einem Innengewinde ausgestattet sind.

Die Durchbrüche sind vorteilhaft in Reihen mit im Wesentlichen gleichmässigen Abständen zwischen den in einer Reihe aufgereihten Durchbrüchen angeordnet. Die Durchbrüche sind kettenartig, insbesondere in einer Reihe oder alternative zwei oder mehr Reihen aufgereiht. Die Durchbrüche sind zweckmässigerweise in der Rückwand entlang des Randbereichs bzw. der Seitenumfassung angelegt, um somit insbesondere dem Elektrodenflächenrandbereich gegenüber zu stehen, sodass in die Durchbrüche eingeführte, insbesondere eingeschraubte, Druckmittel auf die Rückseite einer in die Gehäuseschale eingelegten Elektrode pressen.

Die Gehäuseschalen weisen zweckmässigerweise Durchtrittslöcher (55, 55', 56, 56') zur Zu- und Abfuhr eines Elektrolyten auf, wobei die Durchtrittslöcher insbesondere dazu dienend, die genannten Eintrittsöffnungen mit Elektrolyt zu versorgen bzw. durch die genannten Austrittsöffnungen Elektrolyt abzuziehen. Die Durchtrittslöcher sind vorteilhafterweise in der Aussparung der jeweiligen Gehäuseschale angelegt, insbesondere den Eintritts- und Austrittsöffnungen der Elektroden vorgestellt.

Die Elektroden sind zweckmässigerweise als Platten, insbesondere als ebene Platten, ausgeführt. Dabei weisen die Elektrodenplatten bevorzugt mindestens eine Dicke von 2 mm, weiter bevorzugt mindestens 3 mm, weiter bevorzugt mindesten 3,5 mm, weiter bevorzugt mindestens 4 mm auf.

Zudem sind die Elektroden zweckmässig als langgestreckte Platten z.B. mit einem bevorzugten Seitenverhältnis von mindestens 2:1, weiter bevorzugt mindestens 3:1 ausgeführt.

In einer erfindungsgemässen Elektrolysezelle ist zweckmässigerweise ein einziges Anoden-Kathoden-Paar zwischen der ersten Gehäuseschale und der zweiten Gehäuseschale aneordnet.

Gehäuse- und /oder Rahmenabmessungen sind bevorzugt derart ausgelegt, dass der Abstand zwischen Anode (d.h. der aktiven Anodenoberfläche) und Kathode (d.h. aktiven Kathodenoberfläche) 0.1 mm bis 10 mm, bevorzugt 0,5 mm bis 5 mm, weiter bevorzugt 1 mm bis 3 mm beträgt.

Über die Druckmittel kann der Abstand zwischen Anode (d.h. der aktiven Anodenoberfläche) und Kathode (d.h. aktiven Kathodenaberfläche) mit einer Genauigkeit von ±10 µm, bevorzugt ±1 µm, weiter bevorzugt ±0.1 µm eingestellt werden.

Zweckmässigerweise sind die Eintrittsöffnungen und die Austrittsöffnungen als Durchgang (Durchbruch) in der jeweiligen Elektrode ausgeführt. Die Eintrittsöffnung und die Austrittsöffnung einer Elektrode sind möglichst weit voneinander beabstandet angeordnet (d.h. möglichst nahe den Elektrodenenden angeordnet, wenn die Elektroden als langgestreckte Elektrodenplatten ausgeführt sind), um eine möglichst lange Durchflussstrecke und einen optimalen Durchfluss und Elektrolytdurchsatz zu gewährleisten. Zudem sind vorzugsweise jeweils die Eintrittsöffnungen der beiden Elektroden spiegelbildlich zur Membran einander gegenübergestellt und die Austrittsöffnungen der beiden Elektroden einander gegenübergestellt, sodass in beiden Kammern der Elektrolytfluss in die selbe Richtung weist.

Die Elektroden, Kathode und/oder Anode, sind vorzugsweise aus Metall, insbesondere aus Titan oder Reintitan, gefertigt. Die Anode ist gegebenenfalls säurebeständig beschichtet.

Die Abstandshalter sind insbesondere mit flachen Dichtungsflächen ausgeführt und in ihrer Form (insbesondere in ihrer Ringform) den Elektrodenflächenrandbereichen angepasst, d.h. z.B. als rechteckiger, flacher Ring.

Die Anode und ggf. die Kathode kann eine Beschichtung aufweisen, wobei vorteilhafterweise die Beschichtung der Anode Mischoxyd, bevorzugt Iridium-Mischoxyd enthält oder aus Mischoxyd, bevorzugt aus Iridium-Mischoxyd besteht. Weiter bevorzugt sind Mischoxyde aus Iridium, Lithium und Magnesium. Besonders bevorzugt ist eine Mischoxydbeschichtung dessen Metalloxydgehalt von insgesamt 100 Gew-% zu 30-50 Gew-% aus Iridiumoxyd, zu 30-50 Gew-% aus Lithiumoxyd und einem Rest aus Magnesiumoxyd und maximal 2 Gew-% anderer Metalloxyde besteht. Ganz besonders bevorzugt ist eine Mischoxydbeschichtung dessen Metalloxydgehalt von insgesamt 100 Gew-% zu 35-45 Gew-% aus Iridiumoxyd, zu 35-45 Gew-% aus Lithiumoxyd und einem Rest aus Magnesiumoxyd und maximal 1 Gew-% anderer Metalloxyde besteht. Zum Beispiel ist dies eine Beschichtung, welche im Wesentlichen aus 40% Gew-% Iridiumoxyd, 40% Gew-% Lithiumoxyd und 20 Gew-% Magnesiumoxyd besteht Eine Beschichtung wird z.B. zur Leistungssteigerung oder zur Erhöhung der Standfestigkeit eingesetzt.

Die Beschichtung wird vorzugsweise Vielschichtig aufgetragen. Zum Beispiel mindestens 10 Schichten übereinander, bevorzugt mindestens 20 Schichten, weiter bevorzugt mindestens 30 Schichten.

Gemäss einer vorteilhaften Ausführungsform ist der Gehäuseinnenraum der Elektrolysezelle, welcher die Elektroden mit Membran und Abstandshalter aufnimmt, zweckmässigerweise quaderförmig ausgebildet, und vorzugsweise ungefähr 45 mm X 170 mm X 25 mm (191250 mm³) gross.

Die aktiven Flächen der Anode und der Kathode, welche der Elektrolysereaktion zur Verfügung stehen sind vorzugsweise ungefähr gleich gross, wobei die Fläche je Elektrode bevorzugterweise ungefähr 25 mm X 150 mm (3750 mm²) bemisst.

Im Weiteren ist ein elektrohydraulischer Generator offenbart, welcher mit wenigstens einer hierin beschriebenen Elektrolysezell bestückt ist Die Elektrolysezelle und somit der elektrohydraulische Generator eignen sich besonders zum Herstellen von Säure und Lauge aus NaCl-Sole und entkalktem Wasser.

Die Elektrolysezelle, ist vorteilhafterweise dazu ausgelegt um eine Durchflussmenge von 60 bis 100 Liter pro Stunde, vorzugsweise wenigstens angenähert 80 Liter pro Stunde zu behandeln. Um diese Durchflussmenge zu ermöglichen sind die Eintrittsöffnungen und die Austrittsöffnungen entsprechend angepasst, vorteilhafterweise beträgt die Querschnittfläche der jeweiligen Öffnung zumindest 50 mm².

Die Elektrolysezelle wird vorzugsweise zur Elektrolyse von salzhaltigem und im Wesentlichen kalkfreiem Wasser verwendet. Der Elektrolyt besteht hierzu hauptsächlich aus leicht salzhaltigem und kalkfreiem (d.h. enthärtetem) Wasser. Vorzugsweise wird eine 0.2 %-ige Salzsole verwendet, insbesondere eine 0.2 °k-ige NaCl-Sole. % bezieht sich hier auf Gewichtsprozent

Während der Elektrolysebehandlung entsteht an der Anode eine saure Lösung und an der Kathode eine basische Lösung. Die entstehenden Lösungen fliessen vorteilhafterweise durch je eine Austrittsöffnung in der Anodenkammer bzw. in der Kathodenkammer ab.

Vorteilhafterweis wird die Elektrolysezelle unter Durchflussbedingungen, insbesondere unter kontinuierlichem oder periodischem Durchfluss, verwendet. Frischer Elektrolyt fliesst während der Elektrolyse zweckmässigerweise parallel in beide Elektrolyträume und wird bei Austritt aus der jeweiligen Elektrodenkamrner aufgefangen.

Die mit der erfindungsgemässen Elektrolysezelle auf der Anodenseite hergestellte saure Lösung beinhaltet insbesondere Ozon (03), Sauerstoff (02), Chlor (Cl2) und Wasserstoffperoxid (H2O2), während die auf der Anodenseite erzeugte basische Lösung einer wässrigen Natronlauge entspricht. Eine derartige saure Lösung besitzt infolge der genannten vier Oxidanten eine sehr starke keimreduzierende Wirkung. Die basische Lösung hat mit seiner Konsistenz als wässrige Natronlauge die Eigenschaften eines sehr starken Netzmittels, das die Oberflächenspannung von Materialien reduziert. Durch die Einwirkung einer Kombination, insbesondere einer Mischung, aus saurer Lösung und basischer Lösung entsteht eine massiv reinigende, desinfizierende und keimreduzierender Wirkung.

Aufgrund der erfindungsgemässen Zellarchitektur, insbesondere der sich daraus ergebenden Beströmungsweise der Elektrodenkammern, insbesondere bei bevorzugt vertikaler Durchströmung von unten nach oben, wird in der Elektrolysezelle eine im Wesentlichen laminare Strömung erzeugt. Dies hat eine besonders gute Ausbeute und erstrebenswerte Zusammensetzung an Oxidanten zur Folge. Die erfindungsgemässe Zellarchitektur ist Voraussetzung für konstante Produktqualität.

Zusätzliche Vorteile und Ziele der vorliegenden Erfindung ergeben sich aus der nachfolgenden Beschreibung.

### KURZBESCHREIBUNG DER FIGUREN

Es zeigen schematisch, in nicht massstabsgetreuer Darstellung:
- Figur 1:: einen Schnitt durch eine Elektrolysezelle mit Elektroden, semipermeabler Membran und Dichtungen, (a) Explosionsdarstellung, (b) Darstellung eines gepressten Zustands;
- Figur 2:: eine Elektrode, in Vorderansicht und in Seitenansicht (zur Verwendung als Anode oder als Kathode);
- Figur 3: ein Abstandshalter, bzw. Dichtungsring;
- Figur 4:: ein Zellengehäuse für eine erste Elektrode (bevorzugt für eine Anode), (a) Innenansicht, (b) Seitenansicht;
- Figur 5:: ein Zellengehäuse für eine zweite Elektrode (bevorzugt für eine Kathode), (a) Innenansicht, (b) Seitenansicht;

### DETAILIERTE BESCHREIBUNG DER FIGUREN

Im Folgenden stehen gleiche Bezugsziffern für gleiche oder funktionsgleiche Elemente in unterschiedlichen Figuren.

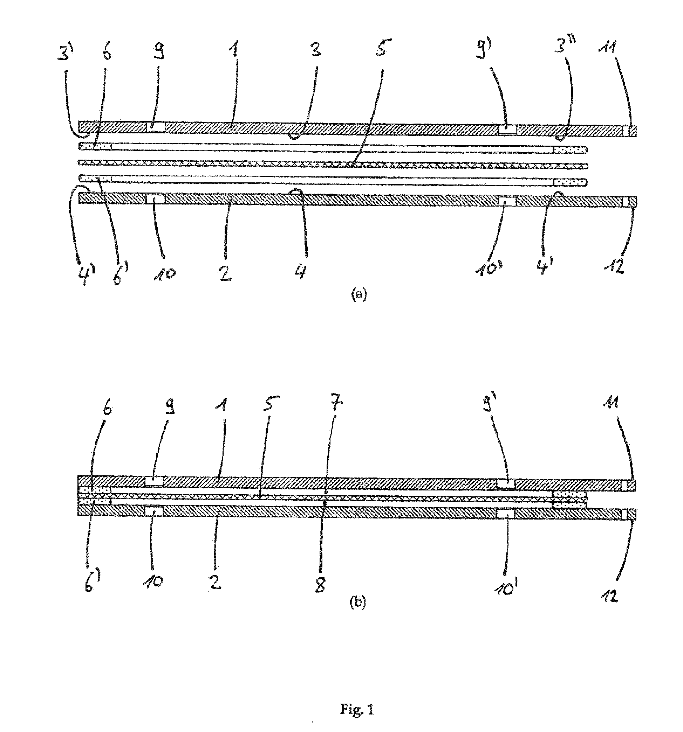

Ein Elektrodenpaket einer Elektrolysezelle, wie es in Fig. 1 schematisch in einem Längsschnitt dargestellt ist, beinhaltet zumindest zwei Elektroden 1 und 2, insbesondere eine Anode und eine Kathode mit je einer aktiven Elektrodenfläche 3 und 4, und eine zwischen den beiden Elektroden angeordnete semipermeablen Membran 5. Einzelteile des Elektrodenpakets sind in Fig. 1(a) in einer Art Explosionszeichnung dargestellt. In Fig. 1 (b) ist ein geklemmtes Elektrodenpaket dargestellt. Zur Wahrung der Distanz zwischen Membran und Elektroden und/oder zur Abdichtung ist je ein Abstandshalter 6 und 6', insbesondere ausgeführt als Ring oder Dichtungsring, zwischen den beiden Elektroden 1 und 2 und der dazwischen liegenden Membran 5 eingelegt. Die Abstandshalter 6 und 6'verlaufen im Wesentlichen entlang dem Rand (Elektrodenflächenrandbereich) der aktiven Elektrodenflächen 3 und 4. Die Abstandshalter 6 und 6' decken im Wesentlichen Elektrodenflächenrandbereiche 3', 3", 4', 4" ab und markieren dadurch den Abschluss der aktiven Elektrodenflächen 3 und 4.

Es besteht beidseits der Membran 5 je ein Elektrolytraum 7 und 8, insbesondere auf einer Seite der Membran ein Anodenraum und auf der anderen Seite ein Kathodenraum. Jeder der Elektrolyträume 7 und 8 eröffnet sich zwischen der jeweiligen Elektrode 1 bzw. 2 und der Membran 5, wobei der Abstand zwischen je einer Elektrode und der Membran 5 durch den jeweiligen Abstandshalter 6 bzw. 6' eingerichtet wird. Die Abstandshalter 6 und 6'sind vorteilhafterweise geschlossen, d.h. als Ringe, ausgeführt. Zwischen dem Abstandshalter 6 oder 6' und der Elektrode 1 bzw. 2 kann zweckmässigerweise zusätzlich noch eine Schutzfolie aus z.B. Polyethylen angeordnete sein, welche den nichtaktiven Bereich der Elektrode abdeckt und gegen besonders aggressive Substanzen schützt.

Die Kathode und die Anode sind vorzugsweise aus Metall, besonders bevorzugt aus Titan oder Reintitan gefertigt. Die Anode ist vorzugsweise säurebeständig beschichtet.

Um einen Austausch des Elektrolyten bzw. einen Durchfluss des Elektrolyten durch den jeweiligen Elektrolytraum 7 und 8 zu ermöglichen, sind Einlauföffnungen und Auslauföffnungen 9, 9' 10, 10' vorgesehen. Diese Ein- und Auslauföffnungen 9, 9' 10, 10' sind vorteilhafterweise in den Elektrodenplatten 1 und 2 angelegt. Bei länglicher Ausführung der Elektrodenplatten 1 und 2 und somit der beiden Elektrolyträume 7 und 8 ist es zweckmässig, die Ein- und Auslauföffnungen 9, 9' 10, 10' möglichst endständig an gegenüberliegenden Enden des jeweiligen Elektrolytraums 7 bzw. 8 anzulegen, um einen möglichst vollständigen, gleichmässigen und effizienten Austausch bzw. Durchfluss der Elektrolyten zu gewährleisten. Die Anschlüsse zur Stromquelle sind im vorliegenden Beispiel an endständigen Fortsätzen 11 und 12 der Elektrodenplatten 1 und 2 vorgesehen. Der Kontakt kann hier z.B. durch einen Steck- oder Klemmkontakt erzeugt werden.

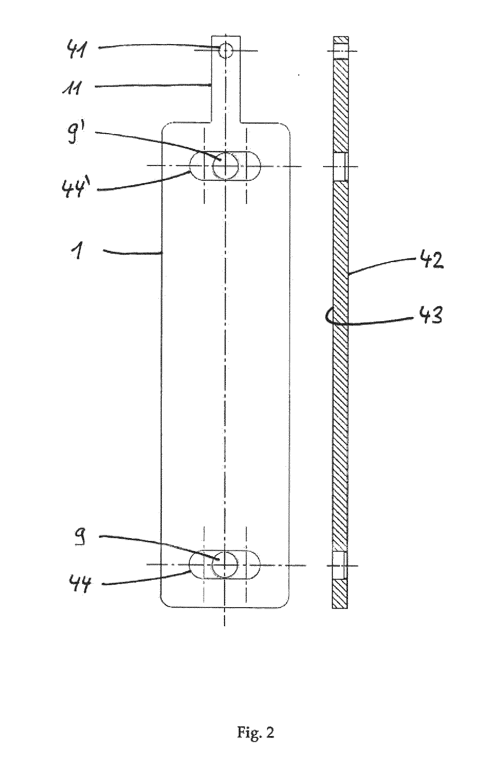

In Fig. 2 ist eine zweckmässige Elektrode 1, wie sie als Anode (hier ohne Beschichtung dargestellt) oder Kathode in der erfindungsgemässen Elektrolysezelle Verwendung finden kann, dargestellt Zweckmässigerweise ist die Elektrode als Elektrodenplatte ausgeführt. Die Platte besitzt eine Vordersite 42 und eine Rückseite 43. Die Vorderseite 42 ist dafür ausgelegt, mit einem Elektrolyt in Kontakt zu stehen. Ein Fortsatz 11 dient dem elektrischen Anschluss an eine Stromversorgung. Eine elektrische Anschlussstelle 41 am Fortsatz 11 kann zum Beispiel als Steckeraufnahme ausgebildet sein. Ein- und Auslauföffnungen 9 und 9' können als Durchgangsbohrungen ausgeführt sein, welche vorteilhafterweise - wie aufgezeigt - voneinander möglichst maximal beabstandet, nahe der Plattenenden endständig zentriert angelegt sind, wobei jedoch ein Abstand zwischen den Auslauföffnungen und dem Rand der Elektrodenplatte für die Auflage eines Dichtungsrings bzw. Abstandshalters 6 vorgesehen ist. Vorteilhafterweise kann elektrodenvorderseitig die Auslauföffnung 9, 9' erweitert sein, um eine vorteilhafte Flussverteilung zu erzeugen. Eine Auslauferweiterung 44, 44' ist zu diesem Zweck insbesondere quer zur Hauptflussrichtung ausgerichtet.

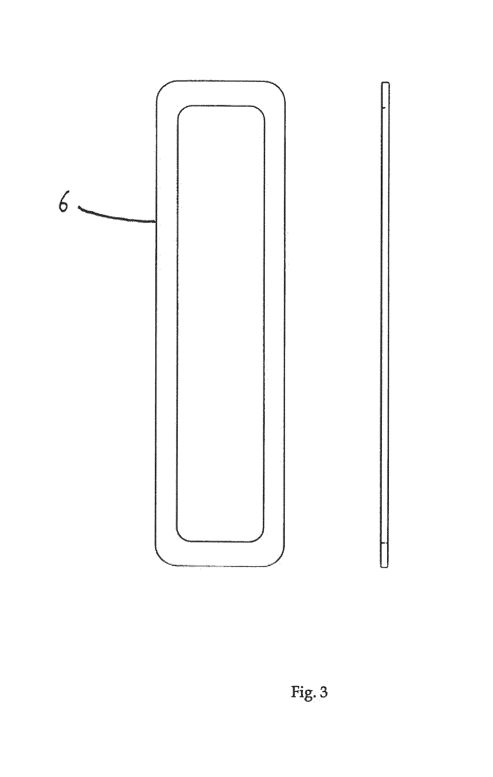

In Fig. 3 ist ein zweckmässiger Abstandshalter 6, wie er in der erfindungsgemässen Elektrolysezelle Verwendung finden kann, dargestellt. Der Abstandshalter ist vorzugsweise als geschlossener Ring mit einer Ringkontur, welche der Kontur der Elektrode angepasst ist, ausgebildet. Aufgrund der angepassten Formgebung von Elektrodenplatte und Abstandshalter können diese sandwichartig aufeinander gelegt werden.

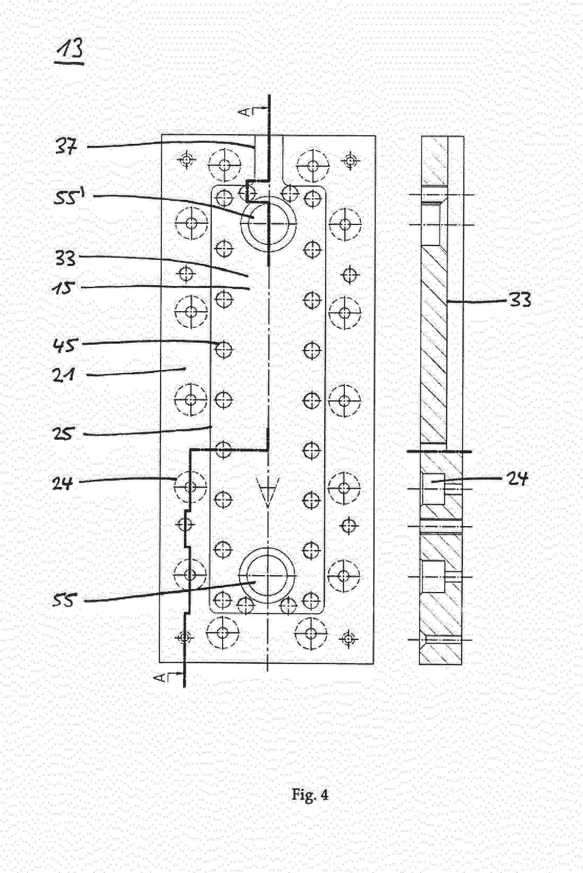

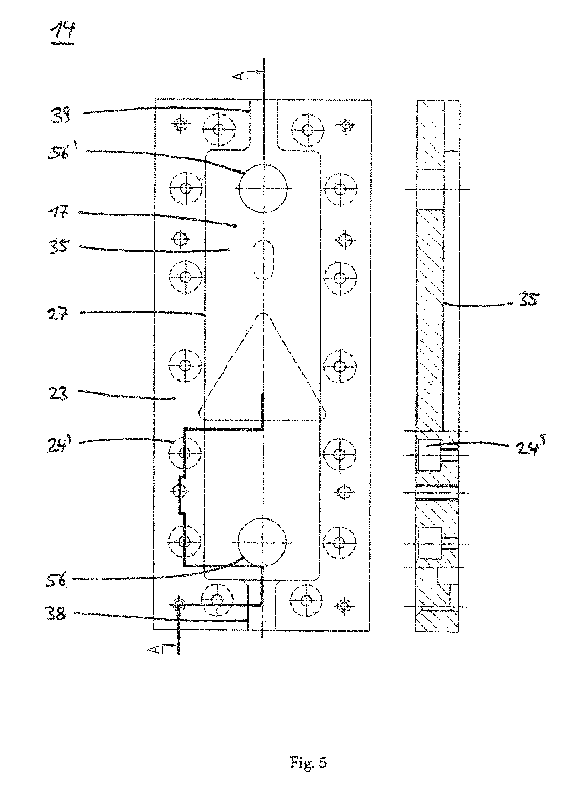

Eine erfindungsgemässe Elektrodialysezelle beinhaltet im Weiteren zwei Gehäuseschalen 13 und 14, wie sie z.B. in den Fig. 4 und 5 dargestellt sind. Die beiden Gehäuseschalen 13 und 14, sind zweckmässigerweise als zwei Halbschalen ausgebildet, welche zusammengesetzt ein Zellgehäuse bilden. Die Gehäuseschalen 13 und 14 sind vorteilhafterweise miteinander verschraubbar. Die Halbschalen 13 und 14 des Gehäuses sind beispielsweise aus einem Kunststoff, insbesondere aus PVC gefertigt. Gemäss einer ersten Ausführungsform wie sie in Fig. 4 und 5 dargestellt ist, besitzen beiden Gehäuseschalen 13 und 14 je einen Hohlraum 15 und 17, welcher derart gestaltet ist, dass nach Zusammensetzen der Gehäuseschalen 13 und 14 aus den beiden Hohlräumen 15 und 17 (im weiteren auch Teilräume genannt) ein Innenraum 19 entsteht. Die Gehäuseschalen beinhalten Rückwand 33, 35 und Randkontur 25, 27, wobei die Randkontur gegebenenfalls durch eine Seitenumfassung 21, 22 gebildet wird. Die Hohlräume sind insbesondere relativ flach und grossflächig ausgebildet. Insbesondere sind die Seitenumfassungen 21 und 23 der beiden Hohlräume 15 und 17 aufeinander abgestimmt, sodass die Randkontur 25 des Hohlraums 15 der ersten Gehäuseschale 13 mit der Randkontur 27 des Hohlraums 17 der zweiten Gehäuseschale 14 im Wesentlichen spiegelbildlich übereinstimmt. Die Rückwand 33, 35 ist bevorzugt flach ausgebildet, dadurch wird die Aufnahme einer ebenfalls flach ausgebildeten Elektrode begünstigt. Gemäss einer alternativen Ausführungsform kann eine der Gehäuseschalen 13 mit einem Hohlraum 15 ausgebildet sein, während die zweite Gehäuseschale lediglich als Deckplatte, z.B. ohne wesentlichen Hohlraum, ausgebildet ist (nicht bildlich dargestellt). Jede Rückwand 33, 35 weist jedoch vorzugsweise eine der jeweiligen Elektrode angepasste Form auf (z.B. im wesentliche flach). Vorzugsweise enthalten die beiden Seitenumfassungen 21 und 23 der Gehäuseschalen 13 und 14 eine Vielzahl von Bohrlöchern 24, 24' zur gegenseitigen Befestigung der beiden Gehäuseschalen 13 und 14. Die Bohrlöcher 24, 24' sind insbesondere in der jeweiligen Seitenumfassung 21, 23 der Gehäuseschalen 13, 14 angelegt. Aufgrund der erhöhten Ausführung zumindest einer der Seitenumfassungen 21 oder 23 gegenüber der jeweiligen Rückwand 33, 35, ergibt sich in zusammengefügtem Zustand der Gehäuseschalen 13 und 14 ein Hohlvolumen, welches Platz bietet für z.B. Elektroden, Membran und Elektrolyt. Als eine weitere alternative Ausführungsform ist ein Gehäuse mit Innenraum und Einlassöffnungen (z.B. Einlassschlitzen) für die zwei Elektroden (z.B. Elektrodenplatten) denkbar.

jede der Gehäuseschalen 13 und 14, bzw. jeder der Hohlräume 15 und 17, bietet Platz für eine Elektrode 1, bzw. 2, welche zweckmässigerweise an der bzw. gegen die Rückwand 33 bzw. 35 des jeweiligen Teilraums angeordnet werden kann. Die Rückwände 33 und 35 dienen somit als Elektrodenauflage. Gemäss der vorgenannten alternativen Ausführungsform mit nur einer Gehäuseschale mit einem Hohlraum kann es genügen die Elektroden 1 und 2 im Hohlraum 15 nur einer Gehäuseschale 13 anzuordnen, wobei die zweite Gehäuseschale hauptsächlich als Elektrodenauflage und Deckenschale (ohne wesentlichen Hohlraum) für die zweite Elektrode dient, wodurch Randkonturen 25 in der zweiten Gehäuseschale gegebenenfalls im Wesentlichen entfallen bzw. überflüssig sind.

Die erste Elektrode 1 und die zweite Elektrode 2 bestehen aus elektrisch leitenden Werkstoffen. Die Elektroden, können zweckmässigerweise speziell beschichtet sein, um gegen die während der Elektrolyse entstehenden chemisch aggressiven Substanzen beständig zu sein. Insbesondere wird zweckmässigerweise zumindest die Elektrode, welche als Anode verwendet wird, mit einer säurebeständigen Beschichtung beschichtet, um gegen die während der Elektrolyse entstehenden chemisch aggressiven Säuren beständig zu sein.

Die Gehäuseschalen 13 und 14 können mit Anschlussöffnungen 37, 38 und 39 für die Elektroden 1 und 2 ausgestattet sein. Zweckmässigerweise können z.B. die beiden Elektrodenfortsätze 11 und 12 durch die genannten Anschlussöffnungen 37, 38 und/oder 39 nach aussen geführt werden oder, wenn z.B. Fortsätze 11 und 12 fehlen, Anschlussdrähte eingeführt werden. Die nach aussen geführten Plattenfortsätze 11 und 12 können mit geeigneten Anschlussstellen 41 der Elektroden 1 und 2 versehen sein, an welchen die Stromquelle angeschlossen wird. Zur Elektrolyse wird zweckmässigerweise eine Gleichspannung angeschlossen.

Der Innenraum 19, welcher vorzugsweise durch die Gehäuseschalen 13 und 14 gebildet wird, dient im Wesentlichen dazu, das oben genannte Elektrodenpaket, d.h. die Elektroden 1 und 2, insbesondere eine Kathode und eine Anode, und eine zwischen den beiden Elektroden angeordnete semipermeable Membrane 5 aufzunehmen. Eine Passvorrichtung, welche am Gehäuse, d.h. insbesondere an zumindest einer der Gehäuseschalen 13 oder 14, vorgesehen ist, dient dazu, die Lagen beinhaltend zumindest eine erste Elektrode, einen ersten Abstandshalter, eine semipermeable Membran, einen zweiten Abstandshalter und eine zweite Elektrode in dieser Reihenfolge aufeinander zu pressen und zu fixieren. Insbesondere weitere Dichtungsringe oder Abstandshalter können zweckmässigerweise zusätzlich in die genannte Lagesequenz des Elektrodenpakets eingefügt werden.

Die Passvorrichtung ist derart angeordnet, dass sie zwischen dem Gehäuse, insbesondere einer der Gehäuseschalen, und zumindest einer der angrenzenden Elektroden wirkt. Die Passvorrichtung dient insbesondere dazu eine erste Elektrodenplatte 1 gegen eine zweite Elektrodenplatte 2 zu drücken, wobei eine Pressverbindung mit den zwischenliegenden Lagen entsteht. Die Passvorrichtung besteht gemäss dargestellter Ausführungsform aus einer Mehrzahl von Gewindebohrungen 45 und entsprechenden Verbindungselementen. Jede Gewindebohrung 45 ist als Durchgangsbohrung mit einem Innengewinde ausgeführt, welche die Gehäusewand durchbricht. Die Gewindebohrungen 45 sind gegebenenfalls innerhalb der Seitenumfassung 21 der Gehäuseschale 13, insbesondere in der Rückwand 35 und/oder 35, angelegt. Der Durchbruch jeder der Gewindebohrungen 45 befindet sich somit an einer Stelle, welche als Auflage für eine der Elektroden vorgesehen ist Die Durchbrüche der Gewindebohrungen 45 sind vorzugsweise gleichmässig voneinander beabstandet in einer Reihe oder alternative zwei oder mehr Reihen aufgereiht, welche jeweils den Randbereich der Elektrodenauflage markieren. Die Durchbrüche sind vorteilhafterweise am Randbereich der Elektrodenauflage entlang aufgereiht. Insbesondere markieren die Durchbrüche den Randbereich zumindest einer der Elektrodenplattenauflagen, vorzugsweise lediglich der Auflage einer der zwei Elektrodenplatten, insbesondere der ersten Elektrodenplatte 1, welche zum Beispiel als Anodenplatte fungiert. Insbesondere sind die Gewindebohrungen in der Rückwand 33 einer der Gehäuseschalen 13 oder alternativ beider Gehäuseschalen angelegt. Geeignete Verbindungselemente beinhalten Schrauben. Ganz besonders geeignet sind Gewindestifte, z.B. mit Innensechskant, welche beliebig tief eingeschraubt werden können. Bei Durchtritt der Verbindungselemente durch die Gehäuseschale 13 kann auf eine in die Gehäuseschale 13 eingelegte erste Elektrode Druck ausgeübt werden, bzw. wird die erste Elektrode gegen die ihr gegenüber positionierte zweite Elektrode gepresst.

Die Reihe der Durchbrüche 45 weist zwischen aufeinander folgenden Durchbrüchen von Durchbruchszentrum zu Durchbruchszentrum im Wesentlichen regelmässige Entfernungen von 0,5 cm bis 2,5 cm, bevorzugt von 1 cm bis 2 cm, auf. Bei longitudinalen Elektroden deren Verhältnis von Länge zu Breite mindestens 2 vorzugsweise mindestens 3 beträgt sind Durchbrüche 45 in zwei Reihen, je eine Reihe im Randbereich entlang der zwei Längsseite der Elektrodenauflage, d.h. korrespondierend zu den zwei Längsseiten der Elektrodenplatte, vorgesehen.

Aufgrund der besonderen Anordnung der Durchbrüche 45 in der Wand der Aussparung 15 welche als Elektrodenaufnahme dient, können Druckmittel, welche in die Durchbrüche geklemmt oder geschraubt werden, direkt auf die Elektrodenrückseite pressen. Dadurch ist der Anpressdruck zwischen den Elektroden unabhängig von der Klemmwirkung zwischen den beiden Gehäuseschalen 13 und 14 einstellbar.

Die Elektrodenplattenstärke hängt hierbei vom verwendeten Plattenmaterial ab. Für Titan- oder Reintitanelektrodenplatten werden Plattenstärken von 3 bis 5 mm bevorzugt.

Um den Elektrolytaustausch zu ermöglichen sind an geeigneter Stelle in den Gehäuseschalen 13 und 14 Durchtrittslöcher 55, 55', 56, 56'vorgesehen. Diese Durchtrittslöcher 55, 55', 56, 56' korrespondieren zweckmässigerweise mit den Ein- und Auslauföffnungen 9, 9', 10,10' der jeweiligen Elektrode 1 oder 2, welche an die Rückwand 33, 35 des Hohlraums der Gehäuseschale angrenzt.

In die beiden Elektrolyträume bzw. Kammern 7 und 8 wird z.B. durch die Bohrungen 55 und 9 bzw. 56 und 10 leicht salzhaltiges, kalkfreies Wasser zugeführt. Die Zufuhr erfolgt zweckmässigerweise kontinuierlich in gleichen Mengen für beide Kammern. Durch Elektrolyse wird im Anodenraum mit der Anode (z.B. erste Elektrodenplatte 1) eine Säure, im Kathodenraum mit der Kathode (z.B. zweite Elektrodenplatte 2) eine Lauge gebildet. Säure und Lauge, die Produkte, die in der erfindungsgemässen Elektrolysezellen vorzugsweises erzeugt werden, fliessen durch je eine Bohrung z.B. 9' und 55', bzw. 10' und 56' durch Leitungen (nicht gezeigt) zu Auffangbehältern (nicht gezeigt). Die umgekehrte Durchlaufrichtung ist ebenfalls möglich. Ein Durchfluss entgegen des Schwerkraftvektors, insbesondere in vertikaler Richtung nach oben, ist bevorzugt.

Im Folgenden wird die Funktion der oben beschriebenen Elektrolysezelle beschrieben.

Während der Elektrolyse in der erfindungsgemässen Elektrolysezelle werden in den zwei Elektrolytkammern 7 und 8, welche durch das semipermeable Diaphragma 5 getrennt sind, die zwei Elektroden 1 und 2 mit Wasser d.h. zum Beispiel Leitungswasser oder Frischwasser (vorteilhafterweise ist das Wasser enthärtet, insbesondere leicht salzhaltig, jedoch kalkfrei bzw. im Wesentlichen kalkfrei) beströmt. Aus dem Elektrolytstrom wird unter Gleichstrom in der Anodenkammer eine saure Lösung (Anostel®) und in der Kathodenkammer eine alkalische Lösung (Cathostel®) erzeugt.

Die bevorzugte Stromstärke für die Elektrolyse von entkalktem Wasser liegt in der Regel im Bereich von 10 bis 20 Ampere, meistbevorzugt im Bereich von 12 bis 14 Ampere, insbesondere bei 13 Ampere.

Die erfindungsgemässe Elektrolysezelle ist bevorzugt derart ausgestaltet, dass die obigen Stromstärken zu Spannungen führt, welche im Bereich von 20 bis 30 Volt, bevorzugt im Bereich von 23 bis 25 Volt, insbesondere bei 24 Volt, liegen.

Die aktiven Flächen des Diaphragmas und der Elektroden sowie die Durchflussgeschwindigkeit sind für optimale Ergebnisse aufeinander abzustimmen. Der Abstand zwischen Diaphragma und Elektroden, welcher sich für die Effizienz der Zelle als massgebend erwies wird erfindungsgemäss durch Manipulieren der Passvorrichtung eingestellt.

Nachfolgend wird die Erfindung anhand von Beispielen erläutert.

### ANWENDUNGSBEISPIELE

### Beispiel 1:

Eine Elektrolysezelle mit Diaphragma, Kathode und Anode wird verwendet, wobei der Innenraum quaderförmig ausgebildet ist, und ungefähr 45 mm X 170 mm X 25 mm (191250 mm³) gross ist und die aktive Flächen der beiden Elektroden einander parallel gegenüber stehen und jede der zwei Elektroden, d.h. die Kathode und die Anode, je ungefähr 25 mm X 150 mm (3750 mm²) gross ist. Anodenraum und Kathodenraum sind ungefähr auf halbem Abstand zwischen Kathode und Anode durch das Diaphragma getrennt. Zwischen Diaphragma und Anode oder Diaphragma und Kathode ist ein Dichtungsring bzw. Abstandshalter eingelegt, wodurch die Metallelektroden einen Abstand von ca. 2 mm halten.

Eine Vielzahl von Schrauben (z.B. 22 Schrauben) säumen im Innenraum die Randbereiche der Rückwand einer der Gehäuseschalen, d.h. die Hälfte der Schrauben (d.h. z.B. 11 Schrauben) werden in je einem der zwei gegenüberliegenden longitudinalen Randbereichen in die Gewinde eingesetzt und zur Druckerzeugung angezogen.

Der verwendete Elektrolyt besteht aus NaCl-Sole und entkalktem Wasser bei Raumtemperatur.

Die Durchflussmenge pro Zeiteinheit durch die Elektrolysezelle beträgt 60 bis 100 Liter pro Stunde, vorzugsweise wenigstens angenähert 80 Liter pro Stunde.

Während der jeweiligen Versuchsdauer konnte eine Effizienzsteigerung gegenüber Gehäuseschalen ohne Passvorrichtung festgestellt werden.

### Beispiel 2:

Unter Verwendung einer 0.2 %-igen NaCl-Sole bei Raumtemperatur wird während dem Betrieb der Elektrolysezelle gemäss Beispiel 1 eine Gleichspannung mit Stromstärke von 13 Ampere angelegt, dies bei einer Durchflussmenge pro Zeiteinheit durch die Elektrolysezelle von ungefähr 80 Liter pro Stunde, d.h. je 40 Liter pro Stunde auf jeder Seite (d.h. auf der Kathodenseite und der Anodenseite der Elektrolysezelle).

### Beispiel 3

Eine Elektrolysezelle gemäss Beispiel 1 wird mit einer Titankathode und einer beschichteten Titananode ausgestattet, wobei die Anode mit einem Iridium-Lithium-Magnesium-Mischoxyd 35-fach beschichtet ist. Unter einem Prozess gemäss Beispiel 3 wird auf der Anodenseite eine saure Lösung mit einem pH-Wert von ca. 2.5 erhalten, welche unter anderem die Oxidanten Ozon (03), Sauerstoff (02), Chlor (Cl2) und Wasserstoffperoxid (H2O2) enthält. Auf der Kathodenseite wird eine wässrige Natronlauge mit einem pH-Wert von ca. 12 erhalten.

### Beispiel 4

Ein Test der bakteriologischen Aktivität der erzeugten sauren Lösung in Bezug auf Standardbakterienstämme unter folgenden Bedingungen:

| | |
|---|---|
| Organismen: | 1. Pseudomonas aeruginosa (ATCC 15442) |
| | 2. Staphylococcus aureus (ATCC 6538) |
| | 3. Salmonella choleraesuis (ATCC 10708) |
| | |
| Kontaktzeit der sauren Lösung: | 30 Sekunden |
| | 2 Minuten |
| | 5 Minuten |
| | 10 Minuten. |

ergab die folgenden Ergebnisse:

| Biozid | Kontaktzeit | Bakterienpositive Träger / 80 getestete Träger |
|---|---|---|
| 1 | 30 sek | 80/80 |
| 1 | 30 sek | 78/80 |
| 1 | 30 sek | 80/80 |
| 1 | 2 min | 77/80 |
| 1 | 2 min | 61/80 |
| 1 | 2 min | 3/80 |
| 1 | 5 min | 0/80 |
| 1 | 5 min | 0/80 |
| 1 | 5 min | 0/80 |
| 1 | 10 min | 0/80 |
| 1 | 10 min | 0/80 |
| 1 | 10 min | 0/80 |
| | | |

| Biozid | Kontaktzeit | Bakterienpositive Träger / 80 getestete Träger |
|---|---|---|
| 2 | 30 sek | 80/80 |
| 2 | 30 sek | 80/80 |
| 2 | 30 sek | 80/80 |
| 2 | 2 min | 79/80 |
| 2 | 2 min | 5/80 |
| 2 | 2 min | 49/80 |
| 2 | 5 min | 1/80 |
| 2 | 5 min | 2/80 |
| 2 | 5 min | 1/80 |
| 2 | 10 min | 1/80 |
| 2 | 10 min | 0/80 |
| 2 | 10 min | 1/80 |
| | | |

| Biozid | Kontaktzeit | Bakterienpositive Träger / 80 getestete Träger |
|---|---|---|
| 3 | 30 sek | 79/80 |
| 3 | 30 sek | 80/80 |
| 3 | 30 sek | 70/80 |
| 3 | 2 min | 27/80 |
| 3 | 2 min | 30/80 |
| 3 | 2 min | 50/80 |
| 3 | 5 min | 0/80 |
| 3 | 5 min | 0/80 |
| 3 | 5 min | 0/80 |
| 3 | 10 min | 0/80 |
| 3 | 10 min | 0/80 |
| 3 | 10 min | 0/80 |

Die saure Lösung erwies sich gegenüber allen drei getesteten Organismen als sehr wirksam.

### BEZUGSZEICHENLISTE:

- 1: Elektrode
- 2: Zweite Elektrode
- 3: Aktive Elektrodenfläche der ersten Elektrode
- 3', 3": Elektrodenflächenrandbereiche der ersten Elektrode
- 4: Aktive Elektrodenfläche der zweiten Elektrode
- 4', 4": Elektrodenflächenrandbereiche der zweiten Elektrode
- 5: Semipermeable Membran
- 6, 6': Abstandshalter bzw. Dichtungsringe
- 7: Elektrolytraum zwischen erster Elektrode und Membran
- 8: Elektrolytraum zwischen zweiter Elektrode und Membran
- 9, 9': Ein- und Auslauföffnungen der ersten Elektrode
- 10, 10': Ein- und Auslauföffnungen der zweiten Elektrode
- 11: Fortsatz der ersten Elektrodenplatte
- 12: Fortsatz der zweiten Elektrodenplatte
- 13: Erste Gehäuseschale
- 14: Zweite Gehäuseschale
- 15: Erster Hohlraum (Aussparung in der Gehäuseschale einen Hohlraum bildend)
- 17: Zweiter Hohlraum (Aussparung in der Gehäuseschale einen Hohlraum bildend)
- 19: Innenraum
- 21: Seitenumfassung der ersten Gehäuseschale
- 23: Seitenumfassung der zweiten Gehäuseschale
- 24, 24': Bohrlöcher
- 25: Randkontur des Hohlraums der ersten Gehäuseschale
- 27: Innere Randkontur des Hohlraums der zweiten Gehäuseschale
- 33: Rückwand des Hohlraums der ersten Gehäuseschale
- 35: Rückwand des Hohlraums der zweiten Gehäuseschale
- 37: Anschlussöffnung in der ersten Gehäuseschale
- 38: Anschlussöffnung in der zweiten Gehäuseschale
- 39: Anschlussöffnung in der zweiten Gehäuseschale
- 41: Elektrische Anschlussstelle einer Elektrode
- 42: Elektrodenvorderseite
- 43: Elektrodenrückseite (Elektrodenhinterseite)
- 44, 44': Auslauferweiterung
- 45: Durchbruch, insbesondere als Gewindebohrung ausgeführt
- 55, 55': Durchtrittslöcher in der ersten Gehäuseschale
- 56, 56': Durchtrittslöcher in der zweiten Gehäuseschale

## Patentansprüche

1. Elektrolysezelle beinhaltend
- ein Gehäuse oder Rahmen (13,14) mit einer ersten Gehäuseschale (13) und einer zweiten Gehäuseschale (14), welche über jeweilige Randzonen (21, 23) zusammenfügbar, insbesondere zusammenklemmbar sind, wobei die Gehäuseschalen (13, 14) innerhalb der Randzonen Rückwände (33, 35) zur Stützung von Elektroden aufweisen,
- zwei Elektroden (1, 2), insbesondere eine Kathode und eine Anode,
- ein elektrischer Anschluss (41) an jeder Elektrode (1, 2),
- zumindest eine semipermeable Membran (5) zur Anordnung zwischen Kathode und Anode,
- zumindest zwei Abstandshalter (6, 6') zur Anordnung einerseits zwischen Membran und Kathode und andererseits zwischen Membran und Anode, wodurch zwischen den Elektroden (1, 2) zwei durch die Membran voneinander abgegrenzte Kammern (7, 8) entstehen,
- in jeder der zwei Kammern (7, 8) je eine Eintrittsöffnung (9, 10) und eine Austrittsöffnung (9', 10') für einen Elektrolyt,
**dadurch gekennzeichnet, dass**
- zumindest eine der Rückwände (33,35) eine Vielzahl von Durchbrüchen (45) aufweist,
- eine Vielzahl von Druckmitteln in den Durchbrüchen (45) angeordnet sind, um den Anpressdruck zwischen Kathode und Anode einzustellen.

2. Elektrolysezelle nach dem vorangehenden Anspruch, **dadurch gekennzeichnet, dass** die Vielzahl der Druckmittel vorzugsweise an einer Rückseite (43) einer der zwei Elektroden, insbesondere dem Verlauf der Abstandshalter (6, 6') folgend angeordnet ist.

3. Elektrolysezelle nach einem der vorangehenden Ansprüche, **dadurch gekennzeichnet, dass** die Vielzahl der Druckmittel in Reihen mit im Wesentlichen gleichmässigen Abständen zwischen den in einer Reihe aufeinander folgenden Druckmitteln angeordnet ist.

4. Elektrolysezelle nach einem der vorangehenden Ansprüche, **dadurch gekennzeichnet, dass** die Distanz von Druckmittelzentrum zu Druckmittelzentrum aufgereihter Druckmittel im Bereich von 1 cm bis 2 cm liegt.

5. Elektrolysezelle nach einem der vorangehenden Ansprüche, **dadurch gekennzeichnet, dass** durchschnittlich pro 3 cm² bis 4 cm² Elektrodenfläche ein Druckmittel angelegt ist.

6. Elektrolysezelle nach einem der vorangehenden Ansprüche, **dadurch gekennzeichnet, dass** die Druckmittel als Schrauben ausgeführt sind, insbesondere als Gewindestifte vorzugsweise mit Innensechskant

7. Elektrolysezelle nach einem der vorangehenden Ansprüche, **dadurch gekennzeichnet, dass** das Gehäuse eine erste Gehäuseschale (13) und eine zweite Gehäuseschale (14) enthält, welche zusammensetzbar sind, wobei vorteilhafterweise zumindest eine Gehäuseschale eine Aussparung (15, 17) mit zurückgesetzter Rückwand (33, 35) aufweist, um eine Elektrode (1, 2) aufzunehmen.

8. Elektrolysezelle nach dem vorangehenden Anspruch, **dadurch gekennzeichnet, dass** die Aussparung (15, 17) mit einer Umfassung (21, 23) umrandet ist und vorteilhafterweise die Umfassung Mittel bzw. Strukturen (24, 24') zur gegenseitigen Befestigung der Gehäuseschalen aufweist.

9. Elektrolysezelle nach einem der vorangehenden Ansprüche, **dadurch gekennzeichnet, dass** die Durchbrüche (45) mit einem Innengewinde ausgestattet sind.

10. Elektrolysezelle nach einem der vorangehenden Ansprüche, **dadurch gekennzeichnet, dass** die Durchbrüche (45) in Reihen mit im Wesentlichen gleichmässigen Abständen zwischen den in einer Reihe aufeinander folgenden Durchbrüchen angeordnet sind.

11. Elektrolysezelle nach einem der vorangehenden Ansprüche, **dadurch gekennzeichnet, dass** die Gehäuseschalen (13, 14) Durchtrittslöcher (55, 55', 56, 56') zur Zu- und Abfuhr eines Elektrolyten aufweisen, wobei die Durchtrittslöcher insbesondere dazu dienend, die genannten Eintrittsöffnungen mit Elektrolyt zu versorgen bzw. durch die genannten Austrittsöffnungen Elektrolyt abzuziehen.

12. Elektrolysezelle nach einem der vorangehenden Ansprüche, **dadurch gekennzeichnet, dass** die Elektroden (1, 2) als Platten, insbesondere als ebene Platten ausgeführt sind und vorzugsweise die Elektrodenplatten mindestens eine Dicke von 2 mm, bevorzugt mindestens 3 mm, weiter bevorzugt mindesten 3,5 mm, weiter bevorzugt mindestens 4 mm aufweisen.

13. Elektrolysezelle nach einem der vorangehenden Ansprüche, **dadurch gekennzeichnet, dass** die Elektroden als langestreckte Platten mit einem bevorzugten Seitenverhältnis von mindestens 2:1, bevorzugt mindestens 3:1 ausgeführt sind.

14. Elektrolysezelle nach einem der vorangehenden Ansprüche, **dadurch gekennzeichnet, dass** der Abstand zwischen Anode und Kathode 0.1 mm bis 10 mm, bevorzugt 0,5 mm bis 5 mm, weiter bevorzugt 1 mm bis 3 mm beträgt.

15. Elektrolysezelle nach einem der vorangehenden Ansprüche, **dadurch gekennzeichnet, dass** durch die Druckmittel der Abstand zwischen Anode und Kathode auf eine Genauigkeit von ±10 µm, bevorzugt ±1 µm, weiter bevorzugt ±0.1 µm einstellbar ist.

16. Elektrolysezelle nach einem der vorangehenden Ansprüche, **dadurch gekennzeichnet, dass** die Eintrittsöffnungen (9, 10) und die Austrittsöffnungen (9', 10') als Durchgang in der jeweiligen Elektrode ausgeführt sind, wobei vorzugsweise die Eintrittsöffnung und die Austrittsöffnung einer Elektrode möglichst weit voneinander beabstandet angeordnet sind.
